Europäisches Patentamt

European Patent Office

Office européen des brevets

(11) Veröffentlichungsnummer: **0 230 915**
**B1**

# (12) EUROPÄISCHE PATENTSCHRIFT

(45) Veröffentlichungstag der Patentschrift:
02.05.90

(51) Int. Cl.⁴: **B60J 3/02**

(21) Anmeldenummer: 87100441.2

(22) Anmeldetag: 15.01.87

(54) Sonnenblende für Fahrzeuge.

(30) Priorität: 22.01.86 DE 3601761

(43) Veröffentlichungstag der Anmeldung:
05.08.87 Patentblatt 87/32

(45) Bekanntmachung des Hinweises auf die Patenterteilung:
02.05.90 Patentblatt 90/18

(84) Benannte Vertragsstaaten:
DE FR GB IT SE

(56) Entgegenhaltungen:
EP-A- 0 053 529
FR-A- 2 167 556
FR-A- 2 548 100
FR-A- 2 554 765

(73) Patentinhaber: Gebr. Happich GmbH,
Postfach 10 02 49 Clausenbrücke 1,
D-5600 Wuppertal 1(DE)

(72) Erfinder: Viertel, Lothar, Jutta v. Hattsteinstrasse 41,
D-6636 Berus Überherrn(DE)
Erfinder: Ebert, Charles, 7. Rue du Parc,
F-70300 Luxeuil(FR)
Erfinder: Krehl, Herrmann, Hebelweg 9,
D-7570 Baden-Baden(DE)
Erfinder: Hilbert, Bernard, 526 Rue de la Forèt,
F-57450 Cappel(FR)
Erfinder: Walter, Rüdiger, An den Martinsgärten 8,
D-6802 Ladenburg(DE)

**Beschreibung**

Die Erfindung bezieht sich auf eine Sonnenblende für Fahrzeuge, bestehend aus einem plattenförmigen Sonnenblendenkörper mit etwa rechteckiger Umrißkontur, der aus Schaumkunststoff gebildet, durch eine Verstärkungseinlage ausgesteift ist und an einem Endbereich einer Längskante ein mit der Verstärkungseinlage verbundenes, im Schaumkunststoff eingelagertes Lagergehäuse aufweist, das zur Aufnahme einer Feder sowie eines durch diese belasteten Achsendes einer Sonnenblendenachse dient, wobei das Lagergehäuse an einem Stirnende eine Stecköffnung für die Aufnahme eines Endbereichs der aus einem Drahtabschnitt gebildeten Verstärkungseinlage und am anderen Stirnende eine Stecköffnung mit größerem Öffnungsquerschnitt für die Aufnahme der Feder und des Achsendes der Sonnenblendenachse aufweist und wobei die für die Aufnahme der Feder und des Achsendes vorgesehene Stecköffnung des Lagergehäuses durch zwei senkrecht angrenzende Seitenwandungen und eine halbkreisförmige, dem Radius der Sonnenblendenachse entsprechende Kopfwandung umrandet ist.

Eine Sonnenblende der gattungsgemäßen Art ist durch die FR- A 2 554 765 bekanntgeworden. Sonnenblenden ähnlichen Aufbaus sind in der EP-A 0 068 269 sowie in der EP-A 0 053 529 gezeigt und beschrieben.

Gegenüber diesem Stand der Technik liegt der Erfindung die Aufgabe zugrunde, eine Sonnenblende der eingangs genannten Art, insbesondere in bezug auf die Ausbildung und Anordnung des Lagergehäuses und der von diesem getragenen Feder zu vereinfachen und zu verbilligen.

Diese Aufgabe wird erfindungsgemäß dadurch gelöst, daß die Stecköffnungen des Lagergehäuses ineinander übergehen, daß die für die Aufnahme der Feder und des Achsendes vorgesehene Stecköffnung des Lagergehäuses durch eine Bodenwandung zusätzlich zu den senkrecht daran angrenzenden Seitenwandungen und der Kopfwandung umrandet ist und daß die Feder eine Blattfeder ist, die einendig eine um 180° umgebogene, sich auf der Bodenwandung der Stecköffnung abstützende Federzunge, anderendig eine abgewinkelte Lasche mit einem Steckloch zur kraftschlüssigen Verbindung mit dem Endbereich des Drahtabschnittes und zwischen der Federzunge und der Lasche einen bogenförmigen Verlauf aufweist.

Durch die erfindungsgemäßen Maßnahmen ergibt sich die vorteilhafte Möglichkeit einer schnell und einfach durchzuführenden Steckverbindung zwischen Versteifungseinlage und Lagergehäuse einerseits und zwischen Versteifungseinlage und Feder andererseits. Die Feder ist zudem innerhalb der Stecköffnung des Lagergehäuses geschützt und gegen Abziehen und Verdrehen gesichert angeordnet.

In Ausgestaltung der Erfindung ist vorgesehen, daß die die Feder und das Achsende der Sonnenblendenachse aufnehmende Stecköffnung einen dem Öffnungsquerschnitt einengenden Vorsprung aufweist, der in eine Ringnut im Endbereich der Sonnenblendenachse eingreift. Durch diese Maßnahme ergibt sich auch für die Sonnenblendenachse eine einfache Steckmontage und eine zuverlässige axiale Festlegung ohne aufwendige Mittel oder zusätzliche Teile.

Zur einfachen und kostengünstigen Herstellung der Sonnenblende trägt es bei, wenn nach einer Weiterbildung der Erfindung vorgesehen wird, daß das Lagergehäuse, als Kunststoff - Spritzgußkörper ausgebildet ist. Für den in der Stecköffnung des Lagergehäuses vorgesehenen Vorsprung, bietet sich dann eine Zwangsentformung an.

Ein Ausführungsbeispiel der Erfindung wird nachfolgend anhand der Zeichnung näher erläutert. Es zeigen:

Fig. 1 ein erstes Ausführungsbeispiel der Sonnenblende und
Fig. 2 bis 5 Einzelheiten der Sonnenblende nach Fig. 1

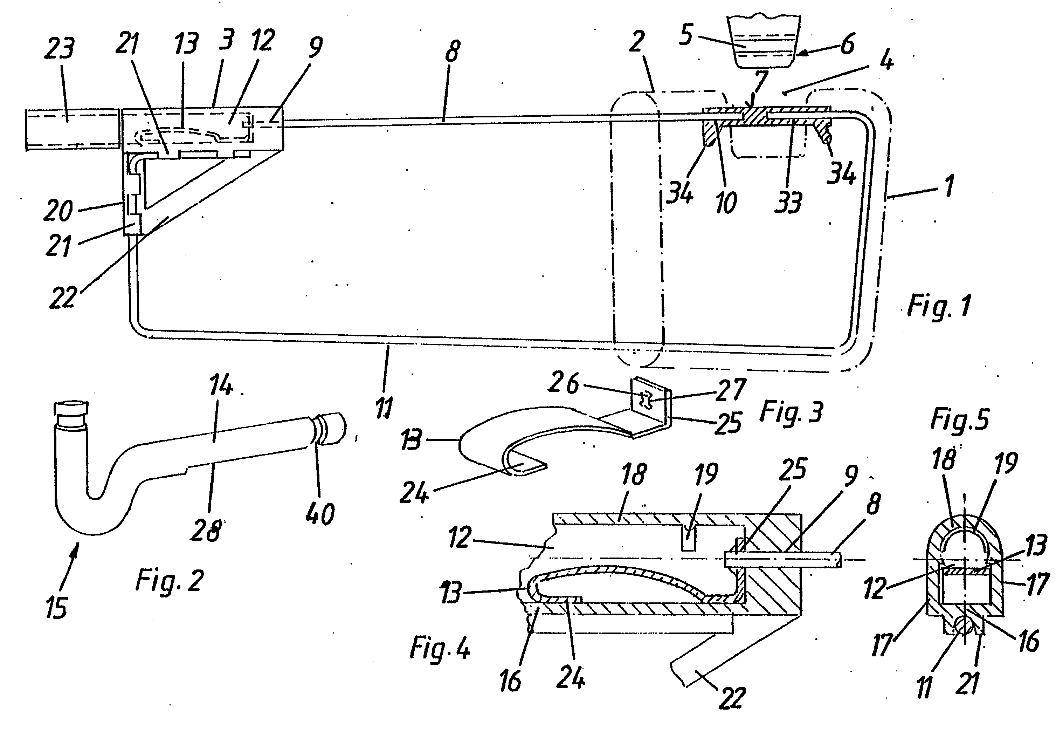

Fig. 1 zeigt einen nur strichpunktiert angedeuteten Sonnenblendenkörper 1 aus Schaumkunststoff, der von einer nicht dargestellten Hüllfolie umgeben ist und der eine eingelagerte Verstärkungseinlage aufweist. Der Sonnenblendenkörper 1 weist eine plattenförmige Ausbildung mit etwa rechteckiger Umrißkontur auf und ist an einem Endbereich seiner oberen Längskante 2 mit einem mit der Verstärkungseinlage verbundenen, im Schaumkunststoff eingelagerten Lagergehäuse 3 ausgerüstet und um anderen Endbereich derselben Länkskante 2 mit einem, eine Aussparung 4 des Sonnenblendenkörpers 1 querenden, lösbar in die Lageraufnahme 5 eines an der Fahrzeugkarosserie befestigbaren Gegenlagers 6 einrastbaren Gegenlagerstift 7 versehen.

Die Verstärkungseinlage besteht aus einem ersten geraden Drahtabschnitt 8, der zwischen dem Lagergehäuse 3 und dem Gegenlagerstift 7 angeordnet ist und der mit seinem einen Ende in eine Stecköffnung 9 des Lagergehäuses 3 und mit seinem anderen Ende in eine Stecköffnung 10 des Gegenlagerstifts 7 eingreift, sowie aus einem zweiten gebogenen Drahtabschnitt 11, der U-förmig ist, wobei die freien Endbereich der U-Schenkel gegeneinander gerichtet abgewinkelt und am Lagergehäuse 3 und am Gegenlagerstift 7 festgelegt sind.

Das als Kunststoff - Spritzgußteil ausgebildete Lagergehäuse 3 weist neben der Stecköffnung 9 eine zweite vom anderen Stirnende her zugängliche Stecköffnung 12 auf, in die Stecköffnung 9 mündet und die zur Aufnahme einer Feder 13 sowie eines Achsschenkels 14 einer etwa L-förmig gebogenen Sonnenblendenachse 15 dient. Die Stecköffnung 12 weist im oberen Bereich einen halbkreisförmigen Öffnungsquerschnitt auf, der in einem rechteckigen Öffnungsquerschnitt übergeht, oder mit anderen Worten, die Stecköffnung 12 ist umgrenzt durch eine Bodenwandung 16, zwei senkrecht daran angrenzende Seitenwandungen 17 und eine halbkreisförmige, dem Radius der Sonnenblendenachse 15 entsprechende Kopfwandung 18. Innerhalb der Stecköffnung 12 ist ein radial nach innen hervortretender Vorsprung 19 angeformt, der war

zenförmig oder, wie dargestellt, als Wulst ausgebildet sein kann. Das Lagergehäuse 3 weist weiterhin einen senkrecht zu den Stecköffnungen ausgerichteten mit dem gebogenen Drahtabschnitt 11 verbundenen stegförmigen Materialansatz 20 mit Rastlappen 21 für den Drahtabschnitt 11 auf, der durch eine Strebe 22 stabilisiert ist. An der Außenwandung des Lagergehäuses 3 sind weitere Rastlappen 21 für den abgewinkelten Schenkelendbereich des Drahtabschnitts 11 angeformt. Der abgewinkelte Schenkelendbereich des Drahtabschnitts 11 verläuft parallel zu den Stecköffnungen 9 und 12 und stützt das Lagergehäuse 3 unterseitig ab. Am vorderseitigen Stirnende des Lagergehäuses 3 ist noch ein Rohrkörper 23 angeformt, der beim Umschäumen ein Eindringen von Schaummaterial in die Stecköffnung 12 verhindern soll und der nach dem Schäumvorgang weggebrochen wird.

Die in der Stecköffnung 12 zunächst angeordnete Feder 13 ist als Blattfeder ausgebildet und weist einendig eine um 180 ° zurückgebogene, sich auf der Bodenwandung 16 abstützende Federzunge 24 und anderendig eine hochgewinkelte Lasche 25 mit einem Steckloch 26 und mit Krallen 27 auf, worin das die Stecköffnung 9 durchgreifende Ende des Drahtes 8 eingreift.

Der weiterhin in die Stecköffnung 12 eingreifende Achsschenkel 14 der Sonnenblendenachse 15, weist zum einen eine den Vorsprung 19 aufnehmende Ringnut 40 und zum anderen eine Abflachung 28 auf, die im Zusammenwirken mit der Feder 13 dazu dient, den Sonnenblendenkörper in der Nichtgebrauchslage zu halten.

Der als Kunststoff - Spritzgußteil ausgebildete Gegenlagerstift 7 weist eine zweite Stecköffnung 33 für die Aufnahme des zweiten abgewinkelten Schenkelendbereich des Drahtabschnitts 11 und an den Endbereichen radial angeformte, im Kunststoffschaum verankerte Materialansätze 34 auf.

**Patentansprüche**

1. Sonnenblende für Fahrzeuge, bestehend aus einem plattenförmigen Sonnenblendenkörper (1) mit etwa rechteckiger Umrißkontur, der aus Schaumkunststoff gebildet, durch eine Verstärkungseinlage ausgesteift ist und an einem Endbereich einer Längskante ein mit der Verstärkungseinlage (8, 11) verbundenes im Schaumkunststoff eingelagertes Lagergehäuse (3) aufweist, das zur Aufnahme einer Feder (13) sowie eines durch diese belasteten Achsendes einer Sonnenblendenachse (15) dient, wobei das Lagergehäuse (3) an einem Stirnende eine Stecköffnung (9) für die Aufnahme eines Endbereichs der aus einem Drahtabschnitt (8) gebildeten Verstärkungseinlage und am anderen Stirnende eine Stecköffnung (12) mit größerem Öffnungsquerschnitt für die gemeinsame Aufnahme der Feder (13) und des Achsendes der Sonnenblendenachse (15) aufweist und wobei die für die Aufnahme der Feder (13) und des Achsendes vorgesehene Stecköffnung (12) des Lagergehäuses (3) durch zwei senkrecht angrenzende Seitenwandungen (17) und eine halbkreisförmige, dem Radius der Sonnenblendenachse (15) entsprechende Kopfwandung (18) umrandet ist, dadurch gekennzeichnet, daß die Stecköffnungen (9, 12) des Lagergehäuses (3) ineinander übergehen, daß die für die Aufnahme der Feder (13) und des Achsendes vorgesehene Stecköffnung (12) des Lagergehäuses (3) durch eine Bodenwandung (16) zusätzlich zu den senkrecht daran angrenzenden Seitenwandungen (17) und der Kopfwandung (18) umrandet ist, und daß die Feder (13) eine Blattfeder ist, die einendig eine um 180° umgebogene, sich auf der Bodenwandung (16) der Stecköffnung (12) abstützende Federzunge (24), anderendig eine abgewinkelte Lasche (25) mit einem Steckloch (26) zur kraftschlüssigen Verbindung mit dem Endbereich des Drahtabschnittes (8) und zwischen der Federzunge (24) und der Lasche (25) einen bogenförmigen Verlauf aufweist.

2. Sonnenblende nach Anspruch 1, dadurch gekennzeichnet, daß die die Feder (13) und das Achsende der Sonnenblendenachse (15) aufnehmende Stecköffnung (12) einen den Öffnungsquerschnitt einengenden Vorsprung (19) aufweist, der in eine Ringnut (40) im Endbereich der Sonnenblendenachse (15) eingreift.

3. Sonnenblende nach Anspruch 1 oder 2, dadurch gekennzeichnet, daß das Lagergehäuse (3) als Kunststoffspritzgußteil ausgebildet ist.

**Claims**

1. A sun visor for a vehicle, the visor comprising a plate-like sun visor body (1) made of a foamed plastics material and having a substantially rectangular contour, wherein the visor body is stiffened by a reinforcing insert and provided at one end portion of one of its longitudinal edges with a bearing casing (3) embedded in the foamed material, joined to the reinforcing insert (8, 11) and serving to house a spring (13) and one end portion of a sun visor shaft (15) biased by said spring, wherein the casing (3) is provided at one of its end faces with a socket (9), which serves to house one end portion of a first length of wire (8) forming part of the reinforcing insert, and at its other end face with a further socket (12) of a larger cross-sectional area and serving to house both the spring (13) and the one end portion of the shaft (15), and wherein the socket (12) of the casing (3) housing the spring (13) and the shaft's one end portion is bordered by two vertically adjoining side walls (17) and by a semicircular top wall (18) the radius of which corresponds to that of the shaft (15), characterized in that the sockets (9, 12) of the casing (3) merge into one another, that the further socket (12) of the casing (3) housing the spring (13) and the shaft's one end portion is bordered – in addition to the two vertical side walls (17) and the top wall (18) – by a bottom wall (16), that the spring (13) is a leaf spring one end portion of which is doubled back through 180° and forms a spring tongue (24) resting on the socket's (12) bottom wall (16), that the spring's other end portion is an angular butt strap (25) having a plug-in aperture (26) for force-locking the one end portion of the wire length (8) therein, and in that the spring between its tongue (24) and its strap (25) is arched.

2. A sun visor according to claim 1, characterized in that the socket (12) housing the spring (13) and the one end portion of the shaft (15) is provided with a protrusion (19) which narrows its cross-sectional area and engages an annular groove (40) in the one end portion of the shaft (15).

3. A sun visor according to claim 1 or claim 2, characterized in that the casing (3) is a component injection-moulded of a plastics material.

**Revendications**

1. Pare-soleil pour véhicules, constitué par un corps de pare-soleil (1) en forme de plaque ayant un contour sensiblement rectangulaire, lequel corps est constitué d'une mousse synthétique, est rigidifié par une garniture de renforcement (8, 11) et comporte sur une zone terminale d'une arête longitudinale un logement de palier (3) relié à la garniture de renforcement (8, 11) et inséré dans la mousse synthétique lequel logement sert à loger un ressort (13) ainsi que l'exrémité d'un axe de pare-soleil (15) assujettie à ce ressort, le logement de palier (3) comportant à une extrémité frontale une ouverture d'enfichage (9) pour recevoir une zone terminale de la garniture de renforcement constituée par une portion de fil métallique (8), et à l'autre extrémité frontale une ouverture d'enfichage (12) de plus grande section d'ouverture pour recevoir ensemble le ressort (13) et l'extrémité de l'axe de pare-soleil (15), l'ouverture d'enfichage (12) du logement de palier (3) prévue pour recevoir le ressort (13) et l'extrémité de l'axe étant délimitée par deux parois latérales (17) verticales voisines et par une paroi supérieure (18) correspondant au rayon de l'axe de pare-soleil (15), caractérisé en ce que les ouvertures d'enfichage (9, 12) du logement de palier (3) se raccordent l'une à l'autre, en ce que l'ouverture d'enfichage (12) du logement de palier (3) prévue pour recevoir le ressort (13) et l'extrémité d'axe est délimitée par une paroi de fond (16), en plus des parois latérales voisines (17) qui lui sont perpendiculaires et de la paroi supérieure (18), et en que le ressort (13) est un ressort à lame qui comporte, à une extrémité, une languette de ressort (24) repliée de 180° s'appuyant sur la paroi de fond (16) de l'ouverture d'enfichage (12), et à l'autre extrémité, une patte coudée (25) munie d'un trou d'enfichage (26) pour la liaison mécanique avec la zone terminale de la portion de fil métallique (8), le tracé du ressort entre la languette de ressort (24) et la patte (25) étant en arc de cercle.

2. Pare-soleil selon la revendication 1, caractérisé en ce que l'ouverture d'enfichage (12) recevant le ressort (13) et l'extrémité d'axe (15) du pare-soleil comporte une saillie (19) rétrécissant la section d'ouverture, laquelle saillie pénètre dans une gorge annulaire (40) prévue dans la zone terminale de l'axe de pare-soleil (15),

3. Pare-soleil selon la revendication 1 ou 2, caractérisé en ce que le logement de palier (3) est réalisé en tant qu'élément en matière plastique moulé par injection.

Fig. 1

Fig. 2

Fig. 3

Fig. 4

Fig. 5

EP 0 230 915 B1